# EUROPEAN PATENT SPECIFICATION

(11) **EP 3 013 650 B1**
(45) Date of publication and mention of the grant of the patent: **12.04.2017**
(21) Application number: 14741398.3
(22) Date of filing: 24.06.2014
(51) Int. Cl.: B60R 16/03, B60L 11/18, H02J 7/34, B60L 11/00, H02J 7/00, B60W 10/26, H02J 7/14, H02J 7/35, B60L 3/00, B60L 3/04

(54) **CHARGE/DISCHARGE DEVICE FOR A PACK OF SUPERCAPACITORS**
LADUNG- UND ENTLADUNGSVORRICHTUNG FÜR SUPERKONDENSATORENPACK
DISPOSITIF DE CHARGE ET DÉCHARGE POUR BLOC-SUPERCONDENSATEURS

(30) Priority: 26.06.2013 IT MI20131063
(43) Date of publication of application: 04.05.2016
(73) Proprietor: Automobili Lamborghini S.P.A., 40019 Sant'Agata Bolognese (BO) (IT)
(72) Inventor: BONAFE', Francesco, I-40132 Bologna (BO) (IT)
(74) Representative: Pizzoli, Antonio
(86) International application number: PCT/IB2014/062563
(87) International publication number: WO 2014/207658

(56) References cited:
- WO-A1-2011/072366
- DE-A1-102008 054 885
- US-A1- 2006 103 358
- US-A1- 2012 133 309

## Description

### TECHNICAL FIELD

The present invention concerns charge/discharge devices of accumulators and more particularly a charge/discharge device of a pack of supercapacitors for applications in the automotive field.

### BACKGROUND

Supercapacitors, which are capacitors with a capacity in the order of many Farads used in place of or in addition to batteries, are becoming increasingly used in the automotive field, thanks to the ease with which they are charged and discharged, to the high number of charge/discharge cycles and to their low weight.

The supercapacitors are increasingly emerging in applications where a high power is required at short time intervals, as for example during the ignition of an internal-combustion engine. For this reason, packs of supercapacitors are increasingly used in order to supply the engine starter and to provide the required peak current by limiting the current absorbed by the battery, thus prolonging its life.

Since the mechanism of energy storage of supercapacitors is not a chemical reaction, as it happens instead in the batteries, the operations of charge/discharge occur at the same speed. Furthermore, supercapacitors have a very low equivalent series resistance, so that they can be charged and discharged at much higher speeds than the usual batteries, which makes them ideal for recovering energy, as for example in recovery braking systems.

Since supercapacitors have an extremely low equivalent series resistance, they pose problems for the usual charging systems for the common batteries because they appear as a virtual short circuit and this may damage the charging circuit. For this reason, supercapacitors are currently charged and discharged only through charge/discharge systems based on switching regulators.

For example, a pack of supercapacitors for applications in the automotive field, which typically has a total capacity of at least 100 F, can be charged/discharged through DC-DC constant current regulators or through buck regulators or also through boost regulators, which are suitable to provide a substantially constant current by gradually increasing/decreasing the output voltage used to charge the pack of supercapacitors, so as to adjust it to the charge voltage of the pack of supercapacitors.

However, when charged, they represent a danger for the operators. Even if the typical charge voltage of a pack of supercapacitors for automotive applications is in the order of ten or a few tens of Volts (typical voltages are 12, 24 or 48V), they, unlike batteries, can deliver very high currents of several thousand Amperes, even higher than those of arc welders, so that they are capable of instantly melt metal items such as screwdrivers and tools of considerable section, sheet metals, carbon fibers, bracelets, chains and electric cables, so as to accidentally cause severe burns and/or starts of fire caused by the induces combustion of insulating materials such as sheaths, paints, etc. For this reason, they should be installed (or removed) discharged, and be charged (or discharged) only when they are on the motor vehicle.

Currently, the operation of charge/discharge of a pack of supercapacitors installed on a motor vehicle is quite inconvenient because it is performed with complex, relatively bulky and expensive electronic devices, typically supplied by mains at 220 V and which are difficult to transport from one motor vehicle to another. However, for the reasons stated above, it is dangerous to charge a pack of supercapacitors on a charge bench and then install it already charged on a motor vehicle.

A device for charging/discharging a pack of supercapacitors would be desirable, in particular for applications in the automotive field, which is simple to be produced with low cost components, which can be easily transported from one motor vehicle to another and handled safely by an operator, while protecting him from the risk of electrocution.

US 2012/133309 A1 discloses a charge/discharge device according to the preamble of claim 1.

### SUMMARY

Although it is commonly known and reported even in the technical documentation of supercapacitors (as for example indicated in Application Note 1008981 of Maxwell Technologies) that they must be charged (and consequently also discharged) by using switching regulators or other specific and complex devices, such as electronic apparatuses with a programmed resistive load which adapt themselves to the needs of the supercapacitors, the applicant has verified that, with a particular choice of the discharge circuit, it is possible to quickly and safely charge/discharge a pack of supercapacitors for automotive applications, which typically has a capacity of the magnitude of about one hundred Farads and a nominal charging voltage of about ten Volts, without using voltage switching regulators.

This result has been obtained with a charge/discharge device essentially made up of low cost passive components, which allows to charge/discharge a pack of supercapacitors for automotive applications without any risk for the operators of the facilities and neighboring equipment and without any danger of damaging the supercapacitors, comprising:
an inner electric charge line connected to a supply terminal of the device;
an inner electric ground discharge line connected to a ground terminal of the device;
an inner electric output line connected to an output terminal of the device;
an on-off-on toggle switch, configured so that:
   - in a first extreme position, it connects said inner charge line to said inner output line,
   - in a central position, it leaves said inner lines mutually disconnected,
   - in a second extreme position, is connects said inner output line with said inner ground discharge line;
a passive bipolar resistive circuit having an overall resistance comprised between 0,1 Ohms and 10 Ohms and inserted in said inner electric output line, comprising at least one power resistor mounted on a heat sink.

According to one embodiment, the bipolar resistive passive circuit comprises two power resistors having a resistance of about 1 Ohm each and being suitable to dissipate a maximum power of about 150W, connected in parallel and mounted on a heat sink made of an anodized aluminum finned plate.

The claims as filed are an integral portion of this description and are incorporated herein by express reference.

### BRIEF DESCRIPTION OF THE DRAWINGS

Figure 1 shows a basic first embodiment of a charge/discharge device according to the present disclosure.
Figure 2 illustrates how to connect the device of Figure 1 to a battery and to a terminal of a pack of supercapacitors connected to a starter of a motor.
Figure 3 shows a charge/discharge device according to the present disclosure with three power resistors in parallel, equipped with a digital panel meter and signaling LEDs.
Figure 4 shows a resistive bipolar circuit alternative to the one shown in Figure 3, which consists of two power resistors in parallel mounted on a heat sink.
Figure 5 shows a detailed circuit diagram of a charge/discharge device according to the present disclosure having a green LED and a red signal LED, and provided with diodes to protect against accidental reverse polarity connections to the vehicle battery and to ground.
Figure 6 is a perspective view of the chassis of the charge/discharge device of this disclosure, with a telescopically extendable hook represented in a retracted position, to hang the device to the bodywork of a motor vehicle.
Figure 7 is a perspective view of the device shown in Figure 6 with the hook in an extended position.

### DETAILED DESCRIPTION

Contrary to what is commonly accepted by the technical experts and commonly held true in practice, it is possible to quickly and safely charge and discharge a pack of supercapacitors for automotive applications, which typically has a total capacity of at least 100 F and a nominal charge voltage of 12 V, without using voltage or current switching regulators, which are expensive and bulky, but simply by using passive and low cost components.

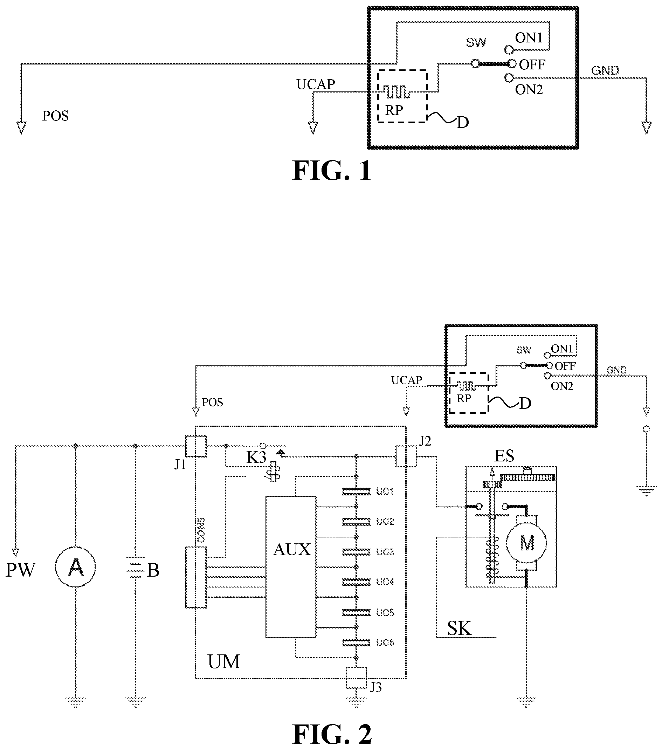

A basic embodiment of a charge/discharge device according to the present disclosure is shown in Figure 1. The device comprises essentially an internal electric charge line connected to a terminal POS of a power supply, an inner electric ground discharge line connected to a ground terminal GND, an inner electric output line connected to an output terminal UCAP, a bipolar resistive passive circuit D, RP inserted in the inner electrical output line, and an on-off-on toggle switch SW. In a first extreme position ON1, the switch SW connects the charge line to the output line by circulating current from the supply terminal POS to the output terminal UCAP in order to charge the pack of supercapacitors connected to it; in a central position OFF, as shown in the figure, it mutually insulates the inner electric lines; in a second extreme position ON2, it connects the output line to the ground discharge line, by circulating current from the output terminal UCAP to the ground terminal GND of the device in order to discharge the pack of supercapacitors.

The device according to the present disclosure charges/discharges under conditions of total safety the pack of supercapacitors on the bipolar resistive circuit without using active and passive switching regulators, possibly providing also full comprehensive information on the state of charge/discharge.

The applicant has found that it is possible to carry out in total safety for the operators the operations of charging/discharging the pack of supercapacitors by using the device shown in Figure 1, provided that the bipolar resistive passive circuit has an overall equivalent resistance Req comprised between 0,1 Ohms and 10 Ohms and has power resistors mounted on a heat sink. Surprisingly, it has been experimentally verified, with a working prototype, that a bipolar resistive circuit thus constructed is able to withstand the exponential charge/discharge currents of a pack of supercapacitors for applications in the automotive field without the supercapacitors themselves being damaged by the charge/discharge current and in an extremely simple, controllable and safe manner, with no harm to operators and devices.

Since the power dissipated on the bipolar resistive circuit is inversely proportional to its total equivalent resistance Req, the latter will be suitably dimensioned so as not to be less than 0,1 Ohms. This minimum value has been identified by the applicant considering that a pack of supercapacitors for applications in the automotive field has a nominal charge voltage of 12 V. With an equivalent resistance Req lower than the minimum identified above, the bipolar resistive circuit should dissipate a power much higher than a kilowatt, which would cause an excessive heating of the charge/discharge device with risks for the operator and for the electronic circuitry, if present in it, and charge/discharge currents exceeding about one hundred Amperes, which, if continued for several seconds, may damage the conventional batteries and overcharge the AGM (Absorbent Glass Mat) batteries for high currents.

Conveniently, the minimum value of the equivalent resistance Req can be correspondingly increased for nominal charge voltages higher than 12V.

Since the total capacity of a pack of supercapacitors for applications in the automotive field is higher than about one hundred Farads, conveniently the equivalent resistance Req of the bipolar resistive circuit will not be greater than 10 Ohms, to avoid unacceptably long charge/discharge times.

When increasing the total capacity of the pack of supercapacitors, it is convenient to reduce in an inversely proportional manner the maximum value of the equivalent resistance Req. For example, if using a pack of supercapacitors with a capacity in the order of one KiloFarad, the equivalent resistance Req will conveniently not exceed 1 Ohm.

Thus, contrary to what has been commonly held true, there is a narrow range of values in which the equivalent resistance Req of the bipolar resistive passive circuit can dimensioned and for which it is possible to carry out in total safety operations of charge/discharge of the packs of supercapacitors currently used in the automotive field, which have a charge voltage in the order of ten Volts and a capacity in the order of several hundred Farads.

According to one embodiment, the bipolar resistive circuit will have an equivalent resistance Req of 0,5 Ohms. This value represents an excellent compromise between the conflicting demands of limiting the power dissipated during the charge/discharge operations and quickly complete the latter.

Figure 2 shows how to connect the device of this disclosure to a terminal J2 of a pack UM of supercapacitors UC1, ..., UC6 connected to the starter ES of a motor M, connected to a line SK of a circuit of a key ignition circuit of the motor vehicle, to a terminal J1 of a battery B of the motor vehicle and to ground. The figure also indicates the alternator A charging the battery B, connected to an inner line PW of the motor vehicle, the charge distributor AUX on the supercapacitors, which acts in such a way that the supercapacitors are charged and discharged together, and its relevant control circuit CON5 that controls the closure of a switch K3 through a relay to connect directly the pack of supercapacitors in parallel to the battery, which occurs when the pack of supercapacitors is charged and must provide the high peak currents absorbed at the ignition, thus saving a stress of the battery. The battery, when the ignition has occurred, along with the alternator works as a reservoir of energy, thus compensating for relatively long times the voltage drop of the supercapacitor, which acts instead as a reservoir of power by delivering in short times very high currents and powers.

When the pack of supercapacitors is discharged and must be charged, or when it is charged and must be discharged, switch K3 is opened and the charge/discharge device of this disclosure is connected as shown in the figure, thus keeping the three-positions switch in the center position OFF so as not to generate sparks or electric discharges. Then, the switch is moved to the extreme position ON1 or ON2 depending on whether the pack of supercapacitors must be charged or discharged.

The central-zero switch can for example be of the type with one pole with 30 A contacts, or even with two poles, with 15 A or 20 A contacts connected in parallel.

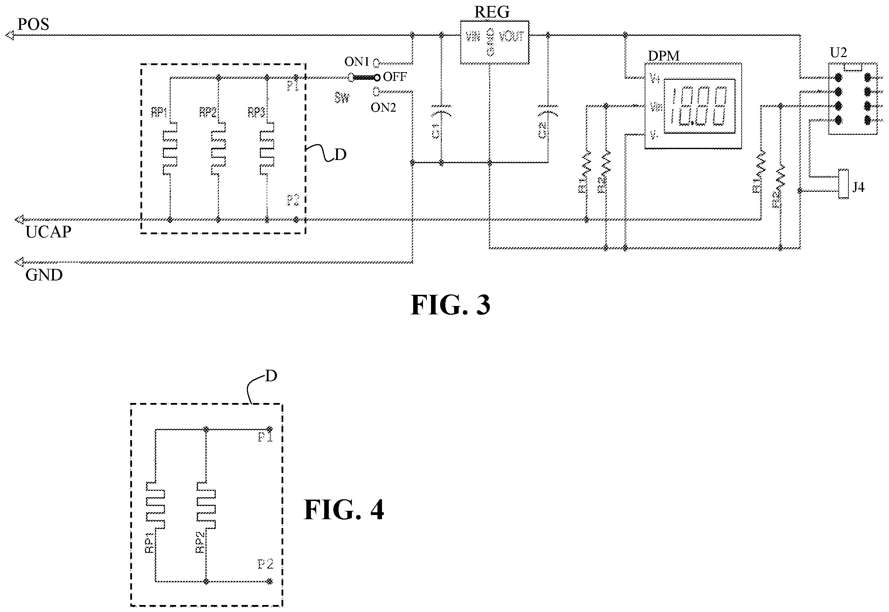

An embodiment of a charge/discharge device according to the present disclosure is shown in Figure 3. The bipolar resistive circuit is in this case made up of three power resistors electrically connected in parallel and mounted on a heat sink D, for example a finned plate made of anodized aluminum with a high surface exposure to the environment. The power resistors can have a resistance of 1,5 Ohms and be constructed for dissipating a maximum power of 100 W each, while the heat sink D may have a size of 160mm x 100mm x 40mm. Alternatively, the bipolar resistive circuit can be composed of two 1 Ohm resistors in parallel constructed to dissipate a maximum power of 150 W each, as shown in Figure 4, also mounted on the heat sink D.

The maximum total value of power of 300 W which can be dissipated, in this case described as an example, is adapted to a pack of supercapacitors having a capacity in the order of several hundred Farads and having a nominal charge voltage of 12 V. By respecting the constraint of the maximum and minimum values of the equivalent resistance Req and by using power resistors to achieve the bipolar resistive circuit, the technical expert will be able to choose the material of the heat sink D as well as its size to dissipate the energy accumulated in a pack of supercapacitors having different capacity and nominal charge voltage, so as to avoid reaching temperatures dangerous for the operators.

In the embodiment of Figure 3, the charge/discharge device comprises a DC-DC voltage regulator REG, supplied by the battery voltage available on the supply terminal POS, which generates a regulated DC voltage VCC on an inner distribution line. A digital voltmeter with a luminous display, for example a digital panel meter DPM, having a positive supply pin V+ connected to the inner distribution line, a negative power supply V- pin connected to the ground terminal of the device, is configured to measure the charge voltage of the pack of supercapacitors. To this end, a resistive divider R1, R2 connected between the output terminal UCAP and the ground terminal GND will generate on its central pin a scaled voltage repetition of the charge voltage of the pack of supercapacitors, which will be applied on a measurement pin Vin of the digital panel meter DPM. The resistive divider R1, R2 is always connected between the output terminal UCAP and the ground terminal GND, so that the charge/discharge device detects the charge voltage of a pack of supercapacitors even if the switch SW is in the central position OFF.

Conveniently, the resistors R1 and R2 will be of high value, typically in the order of kΩ and beyond, in order to absorb a practically negligible current from the pack of supercapacitors.

Optionally, but not necessarily, the DC-DC voltage regulator REG can be equipped with low-pass filtering capacitors C1, C2, to reduce any fluctuations of the regulated voltage VOUT.

The device shown in Figure 3 has also a control circuit U2 of signaling LEDs. This control circuit is supplied with the regulated voltage VOUT, receives in input a scaled repetition of the charge voltage of the pack of supercapacitors provided by a resistive divider, which can be identical to the resistive divider R1, R2 of the digital panel meter or be actually the same, and which is configured to turn on, turn off, and possibly blink at least one LED to indicate a state of complete/incomplete charge/discharge of the pack of supercapacitors. Such control circuit can optionally be enabled/disabled by a jumper J4.

It should be noted that the DC-DC voltage regulator REG shown in Figure 3 is only used to provide a regulated voltage VOUT of lower value than the battery voltage of the motor vehicle: it only has to supply the digital panel meter DPM and the electronic circuit U2 to control the LEDs. In fact, the battery (and thus also the pack of supercapacitors) typically provides a voltage of 12V at full charge, so it cannot be directly connected to the circuit blocks DPM and U2, which typically operate with a voltage of 5V. Such a regulator is therefore much simpler to implement and is subject to considerably less stringent design constraints than the voltage switching regulators that are currently used to charge or discharge the pack of supercapacitors, as it is basically a very low power device. As will be shown later, it may consist of a simple voltage follower.

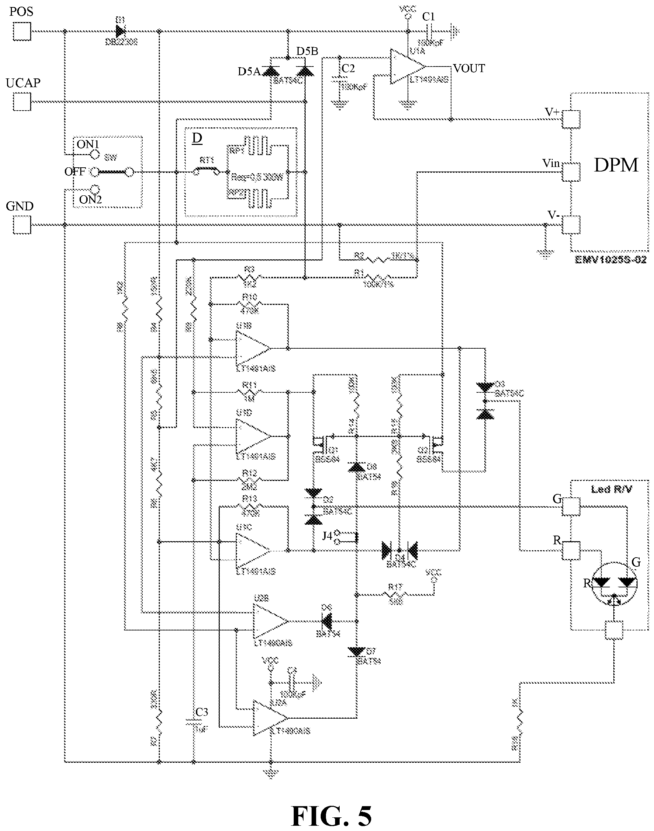

Figure 5 shows a detailed circuit diagram of a working prototype of a charge/discharge device according to the present disclosure, suitable to charge/discharge a pack of supercapacitors with a nominal charge voltage of 12V. The components of Figure 5 which also appear in Figure 4 are indicated with the same references. The numerical values of the resistors and the capacitors, as well as the codes of the electronic components used, must be considered purely illustrative.

Optionally, also a thermal switch RT1 is present in series with the bipolar resistive circuit, which switch, when open, interrupts the charge/discharge of the pack of supercapacitors when the temperature of the bipolar circuit exceeds a predetermined maximum temperature. Preferably, this maximum temperature is 55 °C, which is considered the maximum temperature for withstanding a prolonged contact.

In the embodiment shown in the figure, the voltage regulator that generates the regulated voltage VOUT and supplies the digital panel meter DPM, is an operational amplifier U1A configured as a voltage follower which generates a regulated repetition VOUT of the voltage supplied on the median pin of a resistive divider with three pins R4, R5, R6, R7 coupled between the supply terminal POS and the ground terminal GND of the charge/discharge device. Unlike what is described with reference to Figure 4, the low-pass filter capacitor C2 is connected to an input of the operational amplifier U1A instead than on its output, as it is typical in the topologies of the voltage followers.

Furthermore, diodes D1, D5, preferably Schottky diodes with a very low conduction drop, are present and respectively inserted in the inner electric charge line of the device and between this line and the ends of the bipolar resistive circuit, so as to prevent the circulation of current in case of a reversed polarity connection of the device terminals to the positive terminal of the battery, to the positive terminal of the pack of supercapacitors and to ground.

The illustrated device also includes two LEDs, for example red R and green V, and a relevant control circuit, whose possible electrical diagram is illustrated in detail, which can turn the LEDs on/off by applying appropriate voltages on the anodes G and R.

The control circuit of the LEDs comprises a first threshold comparator, composed of an operational amplifier U1B and of the relevant bias resistors R3 and R10, which compares the charge voltage of the pack of supercapacitors, available at the output terminal UCAP, with an upper threshold, available on the upper pin of the resistive divider R4, R5, R6, R7, and a second threshold comparator, composed of the operational amplifier U1C and of the relevant bias resistors R3 and R13, which compares this charge voltage with a lower threshold available at the bottom pin of the resistive divider R4, R5, R6, R7. The control circuit is configured to turn on in a fixed manner one of the two LEDs, typically the red LED R, when the first threshold comparator U1B switches to high, indicating that the charge voltage is greater than the upper threshold (so the pack supercapacitors is practically charged), and by turning on in a fixed manner the other LED, typically the green LED G, when the second threshold comparator U1C switches to high, indicating that the charge voltage is lower than the lower threshold (and therefore the pack of supercapacitors is practically discharged).

In the embodiment shown, the control circuit of the LEDs is conditioned, in the range between the lower and upper thresholds, by a square wave oscillator composed of the operational amplifier U1D, of the hysteresis, positive feedback and timing resistors R9, R11, R12 and of capacitor C3, which, through the circuitry Q1, Q2, R14, R15, R16, R17, produces the flashing of the LEDs corresponding to the current function of charge/discharge: flashing red LED during the charge with the switch SW in the charge position and flashing green LED during the discharge with the switch SW in the discharge position.

Optionally, a portion of the control circuit, composed of the operational amplifiers U2A, U2B, diodes D6, D7, bias resistors R8, R17 and capacitor C4, can be activated/deactivated through the jumper J4. Said portion is configured to allow or inhibit the flashing of the LEDs when the voltage of the pack of supercapacitors is comprised between the upper and the lower thresholds and when the switch SW is in the central position: in both these conditions, the LEDs may be inhibited by inserting the jumper J4, or, when the jumper J4 is removed, they may flash red and green being modulated in time almost proportionally to the charge level of the pack of supercapacitor.

In the initial condition of any operation, the digital panel accurately displays the charge status.

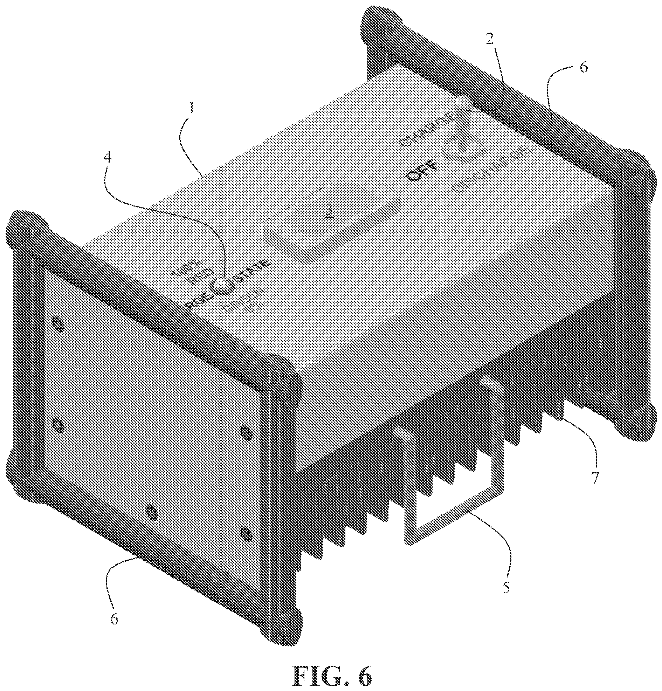

Figure 6 shows an embodiment of the metal chassis 1 of the charge/discharge device according to this disclosure. The lever 2 of the three-positions toggle switch, the luminous display 3 of the digital panel meter and the LEDs 4 for signaling the charge state of the pack of supercapacitors connected to it project from said chassis. A hook 5 telescopically extractable for fixing the device to the bodywork of a vehicle is also visible. The edges of the metal chassis are preferably covered with rubber bumpers 6 to prevent scratching of the bodywork of the motor vehicles on which it will be hooked. A finned heat sink 7, arranged in the bottom portion of the chassis and in contact with the heat sink D, conveniently will have a wide dispersion surface exposed to the air to facilitate cooling of the bipolar resistive circuit.

Preferably, the heat sink D on which the power resistors are mounted is the same finned heat sink 7.

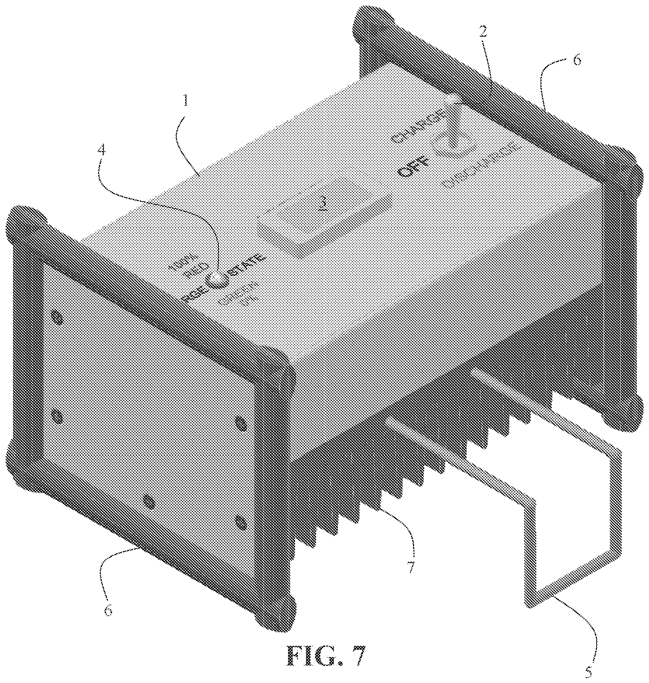

Figure 7 is similar to Figure 6 and shows the charge/discharge device with the hook 5 for attachment to the bodywork completely extracted.

The charge/discharge device according to the present disclosure preferably will be connectable to power cables, ground cables and connection cables to the pack of supercapacitors, having at least a section of 5 mm², suitable to conduct currents even of 25 A, ending with isolated pliers of different colors to identify them.

## Claims

1. A charge/discharge device suitable for charging/discharging a pack of supercapacitors for automotive applications, comprising:
an inner electric charge line connected to a supply terminal (POS) of the device;
an inner electric ground discharge line connected to a ground terminal (GND) of the device;
an inner electric output line connected to an output terminal (UCAP) of the device;
said device further comprising:
an on-off-on toggle switch (SW), configured:
- in a first extreme position (ON1), to connect said inner charge line with said inner output line,
- in a central position (OFF), to leave mutually disconnected said inner lines, - in a second extreme position (ON2), to connect said inner output line with said inner ground discharge line;
**characterized in that** it further comprises:
a passive bipolar resistive circuit (D, RP) having an overall resistance comprised between 0,1 Ohms and 10 Ohms and inserted in said inner electric output line, comprising at least one power resistor (RP) installed on a heat sink (D).

2. The charge/discharge device of claim 1, wherein said passive resistive bipolar circuit has an overall resistance comprised between 0,1 Ohms and 1 Ohm.

3. The charge/discharge device of claim 1, wherein said passive resistive bipolar circuit comprises either three power resistors each having a resistance of about 1,5 Ohms and each being adapted to dissipate a maximum power of about 100W, or two power resistors each having a resistance of about 1 Ohm and being adapted to dissipate a maximum power of about 150W.

4. The charge/discharge device according to one of claims from 1 to 3, wherein said heat sink is a finned plate of anodized aluminum.

5. The charge/discharge device according to one of claims from 1 to 4, further comprising a thermal switch (RT1) functionally connected in series between the passive resistive bipolar circuit (D, RP) and the toggle switch (SW).

6. The charge/discharge device according to one of claims from 1 to 5, further comprising:
a voltage regulator (REG; U1A) connected to said supply terminal and to said ground terminal of the device, configured to generate in operation a DC regulated voltage (VOUT) on an inner distribution line;
a feedback circuit (R1, R2) connected between said output terminal and said ground terminal, adapted to generate on a feedback line a feedback signal (Vin) representative of a voltage available at the output terminal (UCAP) of the device;
a digital voltmeter with a luminous display (DPM) having inputs (V+, V-, Vin) respectively connected to the inner distribution line, to the ground terminal (GND) and to said feedback line, adapted to be supplied with said DC regulated voltage (VOUT) and to show on the display a numeric value of an available voltage measured on the feedback line.

7. The charge/discharge device according to claim 6, wherein said digital voltmeter is a digital panel meter (DPM) and said feedback circuit is a resistive voltage divider (R1, R2) with high input impedance.

8. The charge/discharge device according to one of claims 6 or 7, comprising an electric protection network against accidental connection with inverted polarity to the terminals (POS, UCAP, GND) of the charge/discharge device, comprising:
a first diode (D1) inserted in said inner electric charge line between said supply terminal of the device and an inner node, configured to be in a conduction state when on the supply terminal (POS) of the device is applied a nominal DC supply voltage;
a second diode (D5B) connected between said output terminal (UCAP) and said inner node, configured to be in a conduction state when the output terminal (UCAP) is at a voltage greater than that of the inner node;
a third diode (D5A) connected between said inner node and an intermediate node of the inner output line between said toggle switch (SW) and said resistive bipolar circuit (D, RP), configured to be in a conduction state when the intermediate node is at a voltage greater than that of the inner node.

9. The charge/discharge device according to one of claims from 1 to 8, comprising:
at least two LEDs (R, G);
a control circuit of the LEDs, coupled to said supply terminal of the device, comprising:
- a first threshold comparator (U1B, R3, R10) configured to compare a voltage at said output terminal (UCAP) with an upper threshold and for generating a first inner digital signal having a high logic value when the voltage at the output terminal (UCAP) is greater than the upper threshold,
- a second threshold comparator (U1C, R3, R13) configured for comparing the voltage at said output terminal (UCAP) with a lower threshold and for generating a second inner digital signal having a high logic value when the voltage on the output terminal (UCAP) is smaller than the lower threshold;
said control circuit being configured for turning on a first one of said LEDs when said first inner digital signal is logically high, and for turning on a second one of said LEDs when said second inner digital signal is logically high.

10. The charge/discharge device according to claim 9 when depending from claim 7, comprising a metal chassis (1) that encloses the electric circuits of the device leaving accessible from outside only said supply terminal (POS), said ground terminal (GND) and said output terminal (UCAP), a lever of said on-off-on toggle switch (SW), said two LEDs (R, G) and the display of said digital panel meter (DPM), the metal chassis (1) being further provided with a telescopically extractable/retractable metal hook (5) for hanging the device to the bodywork of a motor vehicle.

## Patentansprüche

1. Eine Lade- und Entladevorrichtung, geeignet zum Laden/Entladen eines Stapels von Superkondenstoren für Automobil-Anwendungen, umfassend:
eine interne, elektrische Ladeleitung, angeschlossen an einen Versorgungsspannungsanschluss (POS) der Vorrichtung;
eine interne, elektrische Entladeleitungs-Masse, angeschlossen an einen Masseanschluss (GND) der Vorrichtung;
eine interne, elektrische Ausgangsleitung, angeschlossen an einen Ausgangsanschluss (UCAP) der Vorrichtung;
wobei die besagte Vorrichtung ferner umfasst:
einen Ein-Aus-Ein-Wechselschalter (SW), konfiguriert, um:
- in einer ersten Endposition (ON1) die interne Ladeleitung mit der besagten, internen Ausgangsleitung zu verbinden,
- in einer Mittenposition (OFF) die besagten internen Leitungen gegenseitig unverbunden zu lassen,
- in einer zweiten Endposition (ON2) die interne Ausgangsleitung mit der besagten, internen Entladeleitungs-Masse zu verbinden,
**dadurch gekennzeichnet, dass** sie ferner umfasst:
einen passiven, zweipoligen Widerstandsschaltkreis (D, RP) mit einem Gesamtwiderstand zwischen 0,1 Ohm und 10 Ohm, eingeschalten in die besagte, interne elektrische Ausgangsleitung, umfassend wenigstens einen auf einem Kühlkörper (D) installierten Leistungswiederstand (RP).

2. Die Lade- und Entladevorrichtung nach Anspruch 1, wobei der besagte passive, zweipolige Widerstandsschaltkreis einen Gesamtwiderstand zwischen 0,1 Ohm und 1 Ohm hat.

3. Die Lade- und Entladevorrichtung nach Anspruch 1, wobei der besagte passive, zweipolige Widerstandsschaltkreis entweder drei Leistungswiderstände umfasst, von denen jeder einen Widerstand von etwa 1,5 Ohm hat, und von denen jeder in der Lage ist, um eine maximale Leistung von etwa 100 W abzuführen, oder zwei Leistungswiderstände, von denen jeder einen Widerstand von etwa 1 Ohm hat und in der Lage ist, eine maximale Leistung von etwa 150 W abzuführen.

4. Die Lade- und Entladevorrichtung nach einem der Ansprüche 1 bis 3, wobei der Kühlkörper eine mit Rippen versehene Platte aus eloxiertem Aluminium ist.

5. Die Lade- und Entladevorrichtung nach einem der Ansprüche 1 bis 4, ferner umfassend einen Thermoschalter (RT1), der funktionell in Reihe geschalten ist zwischen dem passiven, zweipoligen Widerstandsschaltkreis (D. RP) und dem Wechselschalter (SW).

6. Die Lade- und Entladevorrichtung nach einem der Ansprüche 1 bis 5, ferner umfassend:
einen Spannungsregler (REG; U1A), welcher an den besagten Versorgungsspannungsanschluss sowie an den besagten Masseanschluss der Vorrichtung angeschlossen sowie derart konfiguriert ist, um während des Betriebs an einer internen Verteilungsleitung eine geregelte Gleichspannung (VOUT) zu erzeugen;
einen Rückkopplungsschaltkreis (R1, R2), der zwischen dem besagten Ausgangsanschluss und dem besagten Masseanschluss angeschlossen und in der Lage ist, an einer Rückkopplungsleitung ein Rückkopplungssignal (Vin) zu erzeugen, welches repräsentativ für eine Spannung ist, die an dem Ausgangsanschluss (UCAP) der Vorrichtung zur Verfügung steht;
ein digitales Spannungsmessgerät mit einer Leuchtanzeige (DPM) und mit den Eingängen (V+, V-, Vin), angeschlossen an die interne Verteilungsleitung, den Masseanschluss (GND) beziehungsweise an die besagte Rückkopplungsleitung, das in der Lage ist, von der besagten, geregelten Gleichspannung (VOUT) gespeist zu werden und einen numerischen Wert einer verfügbaren Spannung, die auf der Rückkopplungsleitung gemessen wird, auf der Anzeige darzustellen.

7. Die Lade- und Entladevorrichtung nach Anspruch 6, wobei das besagte, digitale Spannungsmessgerät ein digitales Anzeigegerät (DPM) ist, und wobei der besagte Rückkopplungsschaltkreis ein ohmscher Spannungsteiler (R1, R2) mit einem hohen Eingangswiderstand ist.

8. Die Lade- und Entladevorrichtung nach einem Ansprüche 6 oder 7, umfassend ein elektrisches Schutznetzwerk gegen versehentliche Verbindungen der Anschlüsse (POS, UCAP, GND) der Lade-/ Entladevorrichtung mit invertierter Polarität, umfassend:
eine erste, in die interne elektrische Ladeleitung zwischen dem besagten Versorgungsspannungsanschluss der Vorrichtung und einem internen Knoten eingeschaltete Diode (D1), welche konfiguriert ist, um in leitfähigem Zustand zu sein, wenn auf der Versorgungsspannungsleitung (POS) der Vorrichtung eine Nenngleichspannung anliegt;
eine zweite, zwischen dem besagten Ausgangsanschluss (UCAP) und dem besagten, internen Knoten angeschlossene Diode (D5B), welche konfiguriert ist, um in leitfähigem Zustand zu sein, wenn der Ausgangsanschluss (UCAP) eine höhere Spannung aufweist als der innere Knoten;
eine dritte, zwischen dem besagten, internen Knoten und einem Zwischenknoten der internen Ausgangsleitung zwischen dem besagten Wechselschalter (SW) und dem besagten, zweipoligen Widerstandsschaltkreis (D, RP) angeschlossene Diode (D5A), welche konfiguriert ist, um in leitfähigem Zustand zu sein, wenn der Zwischenknoten eine höhere Spannung aufweist als der innere Knoten.

9. Die Lade- und Entladevorrichtung nach einem der Ansprüche 1 bis 8, umfassend:
wenigstens zwei LEDs (R, G);
einen Steuerschaltkreis für die LEDs, der an den besagten Versorgungsspannungsanschluss der Vorrichtung gekoppelt ist, umfassend:
- einen ersten Schwellwertkomparator (U1B, R3, R10), welcher dazu konfiguriert ist, um eine Spannung an dem besagten Ausgangsanschluss (UCAP) mit einem oberen Schwellwert zu vergleichen und ein erstes internes Digitalsignal zu erzeugen mit einem Wert logisch high, wenn die Spannung an dem Ausgangsanschluss (UCAP) größer ist als der obere Schwellwert,
- einen zweiten Schwellwertkomparator (U1C, R3, R13), welcher dazu konfiguriert ist, um die Spannung an dem besagten Ausgangsanschluss (UCAP) mit einem unteren Schwellwert zu vergleichen und ein zweites internes Digitalsignal zu erzeugen mit einem Wert logisch high, wenn die Spannung an dem Ausgangsanschluss (UCAP) kleiner ist als der untere Schwellwert,
wobei der besagte Steuerschaltkreis dazu konfiguriert ist, eine erste der besagten LEDs einzuschalten, wenn das besagte erste interne Digitalsignal logisch high ist, sowie dazu, eine zweite der besagten LEDs einzuschalten, wenn das besagte zweite interne Digitalsignal logisch high ist.

10. Die Lade- und Entladevorrichtung nach Anspruch 9, insofern dieser von Anspruch 7 abhängt, umfassend ein Metallchassis (1), das die elektrischen Schaltkreise der Vorrichtung einschließt, und welches von außen nur Zugang lässt zu dem besagten Versorgungsspannungsanschluss (POS), zu dem besagten Masseanschluss (GND) und dem besagten Ausgangsanschluss (UCAP), zu einem Hebel des besagten Ein-Aus-Ein-Wechselschalters (SW), zu den besagten zwei LEDs (R, G), und zu der Anzeige des besagten digitalen Anzeigegeräts (DPM), wobei das Metallchassis (1) ferner mit einem teleskopisch herausziehbaren/einziehbaren Metallhaken (5) zum Aufhängen der Vorrichtung an der Karosserie eines Kraftfahrzeugs versehen ist.

## Revendications

1. Dispositif de charge/décharge approprié pour charger/décharger un bloc de super-condensateurs pour des applications automobiles, comprenant :
une ligne de charge électrique intérieure connectée à une borne d'alimentation (POS) du dispositif ;
une ligne de décharge à la masse électrique intérieure connectée à une borne de masse (GND) du dispositif ;
une ligne de sortie électrique intérieure connectée à une borne de sortie (UCAP) du dispositif ;
ledit dispositif comprenant en outre :
un commutateur à bascule connecté-déconnecté-connecté (SW), configuré :
- dans une première position extrême (ON1), pour connecter ladite ligne de charge intérieure à ladite ligne de sortie intérieure,
- dans une position centrale (OFF), pour laisser lesdites lignes intérieures mutuellement déconnectées,
- dans une deuxième position extrême (ON2), pour connecter ladite ligne de sortie intérieure à ladite ligne de décharge à la masse intérieure ;
**caractérisé en ce qu'**il comprend en outre :
un circuit résistif bipolaire passif (D, RP) ayant une résistance globale comprise entre 0,1 ohm et 10 ohms et inséré dans ladite ligne de sortie électrique intérieure, comprenant au moins une résistance de puissance (RP) installée sur un dissipateur de chaleur (D).

2. Dispositif de charge/décharge selon la revendication 1, dans lequel ledit circuit bipolaire résistif passif a une résistance globale comprise entre 0,1 ohm et 1 ohm.

3. Dispositif de charge/décharge selon la revendication 1, dans lequel ledit circuit bipolaire résistif passif comprend soit trois résistances de puissance ayant chacune une valeur de résistance d'environ 1,5 ohms et conçues chacune pour dissiper une puissance maximum d'environ 100W, soit deux résistances de puissance ayant chacune une valeur de résistance d'environ 1 ohm et conçues pour dissiper une puissance maximum d'environ 150 W.

4. Dispositif de charge/décharge selon l'une des revendications 1 à 3, dans lequel ledit dissipateur de chaleur est une plaque à ailettes en aluminium anodisé.

5. Dispositif de charge/décharge selon l'une des revendications 1 à 4, comprenant en outre un commutateur thermique (RT1) connecté fonctionnellement en série entre le circuit bipolaire résistif passif (D, RP) et le commutateur à bascule (SW).

6. Dispositif de charge/décharge selon l'une des revendications 1 à 5, comprenant en outre :
un régulateur de tension (REG ; U1A) connecté à ladite borne d'alimentation et à ladite borne de masse du dispositif, configuré pour générer, en fonctionnement, une tension régulée continue (VOUT) sur une ligne de distribution intérieure ;
un circuit de rétroaction (R1, R2) connecté entre ladite borne de sortie et ladite borne de masse, conçu pour générer, sur une ligne de rétroaction, un signal de rétroaction (Vin) représentatif d'une tension disponible au niveau de la borne de sortie (UCAP) du dispositif ;
un voltmètre numérique avec un afficheur lumineux (DPM) ayant des entrées (V+, V-, Vin) respectivement connectées à la ligne de distribution intérieure, à la borne de masse (GND) et à ladite ligne de rétroaction, conçu pour recevoir ladite tension régulée continue (VOUT) et pour présenter, sur l'afficheur, une valeur numérique d'une tension disponible mesurée sur la ligne de rétroaction.

7. Dispositif de charge/décharge selon la revendication 6, dans lequel ledit voltmètre numérique est un appareil de mesure numérique de panneau (DPM) et ledit circuit de rétroaction est un diviseur de tension à résistances (R1, R2) avec une haute impédance d'entrée.

8. Dispositif de charge/décharge selon l'une des revendications 6 ou 7, comprenant un réseau de protection électrique contre une connexion accidentelle avec une polarité inversée aux bornes (POS, UCAP, GND) du dispositif de charge/décharge, comprenant :
une première diode (D1) insérée dans ladite ligne de charge électrique intérieure entre ladite borne d'alimentation du dispositif et un noeud intérieur, configurée pour être dans un état de conduction lorsque la borne d'alimentation (POS) du dispositif reçoit une tension d'alimentation continue nominale ;
une deuxième diode (D5B) connectée entre ladite borne de sortie (UCAP) et ledit noeud intérieur, configurée pour être dans un état de conduction lorsque la borne de sortie (UCAP) est à une tension supérieure à celle du noeud intérieur ;
une troisième diode (D5A) connectée entre ledit noeud intérieur et un noeud intermédiaire de la ligne de sortie intérieure entre ledit commutateur à bascule (SW) et ledit circuit bipolaire résistif (D, RP), configurée pour être dans un état de conduction lorsque le noeud intermédiaire est à une tension supérieure à celle du noeud intérieur.

9. Dispositif de charge/décharge selon l'une des revendications 1 à 8, comprenant :
au moins deux DEL (R, G) ;
un circuit de commande des DEL, couplé à ladite borne d'alimentation du dispositif, comprenant :
- un premier comparateur de seuil (U1 B, R3, R10) configuré pour comparer une tension au niveau de ladite borne de sortie (UCAP) avec un seuil supérieur et pour générer un premier signal numérique intérieur ayant une valeur logique haute lorsque la tension au niveau de la borne de sortie (UCAP) est supérieure au seuil supérieur,
- un deuxième comparateur de seuil (U1C, R3, R13) configuré pour comparer la tension au niveau de ladite borne de sortie (UCAP) avec un seuil inférieur et pour générer un deuxième signal numérique intérieur ayant une valeur logique haute lorsque la tension sur la borne de sortie (UCAP) est inférieure au seuil inférieur ;
ledit circuit de commande étant configuré pour activer une première desdites DEL lorsque ledit premier signal numérique intérieur est à un niveau logique haut, et pour activer une deuxième desdites DEL lorsque ledit deuxième signal numérique intérieur est à un niveau logique haut.

10. Dispositif de charge/décharge selon la revendication 9 lorsqu'elle dépend de la revendication 7, comprenant un châssis métallique (1) qui enferme les circuits électriques du dispositif en ne laissant accessibles de l'extérieur que ladite borne d'alimentation (POS), ladite borne de masse (GND) et ladite borne de sortie (UCAP), un levier dudit commutateur à bascule connecté-déconnecté-connecté (SW), lesdites deux DEL (R, G) et l'afficheur dudit appareil de mesure numérique de panneau (DPM), le châssis métallique (1) étant en outre pourvu d'un crochet métallique extractible/rétractable de manière télescopique (5) pour suspendre le dispositif à la carrosserie d'un véhicule automobile.
